# EUROPÄISCHE PATENTSCHRIFT

(11) **EP 1 616 780 B1**
(45) Veröffentlichungstag und Bekanntmachung des Hinweises auf die Patenterteilung: **15.08.2007**
(21) Anmeldenummer: 05013196.0
(22) Anmeldetag: 18.06.2005
(51) Int. Cl.: B62K 25/24, B62J 27/00

(54) **Radaufhängung für ein lenkbares Fahrzeugrad**
Suspension for a steerable vehicle wheel
Suspension pour une roue directionnelle d'un véhicule

(30) Priorität: 12.07.2004 DE 102004033622
(43) Veröffentlichungstag der Anmeldung: 18.01.2006
(73) Patentinhaber: Bayerische Motoren Werke Aktiengesellschaft, 80809 München (DE)
(72) Erfinder: Hubertz, Mike, 80999 München (DE); Brandl, Raimund, 94347 Ascha (DE)

(56) Entgegenhaltungen:
- DE-A1- 10 123 940
- DE-A1- 10 204 464
- GB-A- 2 207 645
- BMW MOTORRAD: "BMW Motorrad Roadster K1200R" April 2005 (2005-04), BMW AG, MÜNCHEN, BROCHURE NO. 5 11 204 068 65 , MÜNCHEN , XP002351041 * Seite 22 - Seite 23; Abbildungen *

## Beschreibung

Die vorliegende Erfindung betrifft eine Radaufhängung für ein lenkbares Fahrzeugrad gemäß dem Oberbegriff des Hauptanspruchs.

Eine derartige Radaufhängung schlägt die DE 102 04 464 A1 für Motorräder vor. Dort ist ein Radträger vorgesehen, der über zwei Längslenker schwenkbar mit dem Motorradrahmen verbunden ist. Im unteren Bereich des Radträgers ist das Vorderrad gelagert. Aufgrund von gesetzlichen bzw. behördlichen Vorschriften dürfen die Bauteile von solchen Vorderradführungen bis zu bestimmten Belastungsgrenzen nicht reißen. Um diese Forderungen zu erfüllen, müssten die besonders betroffenen Bauteile bei gleichem Material größer dimensioniert werden, was letztendlich zu schwereren, die Fahrdynamik negativ beeinflussenden und teueren Bauteilen führen würde.

Aufgabe der Erfindung ist es, eine gattungsgemäße Vorderradaufhängung so auszulegen, dass sie ohne unerwünschten Gewichtszuwachs den vorgeschriebenen Belastungen standhält.

Diese Aufgabe wird erfindungsgemäß durch die kennzeichnenden Merkmale des Hauptanspruchs gelöst. Vorteilhafte Ausgestaltungen und Weiterbildungen der Erfindung ergeben sich aus den Unteransprüchen.

Dem Grundprinzip der Erfindung liegt die Erkenntnis zu Grunde, dass bei derartigen Radaufhängungen bei den gegebenen Belastungen vor allem auch die Längslenker und hier insbesondere der obere Längslenker beansprucht werden. Dabei sind im wesentlichen zwei Belastungsfälle zu betrachten. Im einen Belastungsfall, bei dem eine horizontale Kraft das Vorderrad beaufschlagt - das Rad prallt beispielsweise gegen ein Hindernis - wirkt ein rechtsdrehendes Biegemoment auf den oberen Längslenker. Der andere Belastungsfall zeichnet sich durch senkrecht am Rad angreifende Kräfte aus, wenn Schläge, beispielsweise beim Überfahren von Fahrbahnenebenheiten auf das Fahrzeugrad wirken. Hier beansprucht ein linksdrehendes Moment den oberen Längslenker.

Die nach der Erfindung vorgesehene Materialschwächung erlaubt es dem Längsträger, beim Auftreten des rechtsdrehenden Moments sich zu verbiegen, ohne zu reißen. Beim linksdrehenden Moment hingegen unterstützt der in die Materialschwächung eingelegte Nutstein die benachbarten Abschnitte des Längslenkers und erhöht so seine Steifigkeit.

Im folgenden wird die Erfindung anhand eines Ausführungsbeispieles und der dazugehörenden Zeichnung näher erläutert. Es zeigen:
- Figur 1: die Vorderradaufhängung eines Motorrads mit zwei Längslenkern, und
- Figur 2: eine vergrößerte Darstellung des oberen Längslenkers, von schräg unten gesehen.

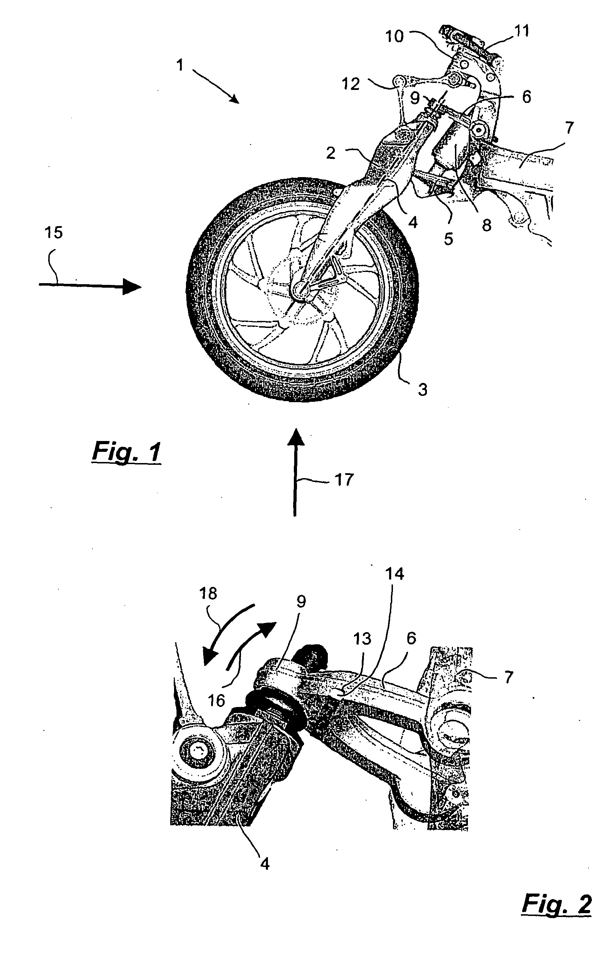

Figur 1 zeigt eine Vorderradaufhängung 1 eines Motorrads. Am unteren freien Ende eines Radträgers 2 ist ein Vorderrad 3 gelagert. Der Radträger 2 ist zusammen mit dem Vorderrad 3 um eine hier nur schematisch angedeutete Radträgerlängsachse 4 lenk- und in Richtung dieser Längsachse schwenkbar. Hierfür ist der Radträger 2 über einen unteren Längslenker 5 und einen oberen Längslenker 6 federnd an einem Rahmenelement 7 des Motorrads befestigt. Beide Längslenker 5 und 6 sind über Drehgelenke am Rahmenabschnitt gelagert, so dass sie Schwenkbewegungen in einer vertikalen Ebene ausführen können. Dabei stützt sich der untere Längslenker 5 über ein Feder-Dämpfer-Bein 8 am Rahmenabschnitt 7 ab.

An den Radträger sind die Längslenker jeweils mit einem Universalgelenk, das heißt Kugelgelenk angebunden. Das Kugelgelenk des unteren Längslenkers 5 ist in Fig. 1 nicht erkennbar, da es innerhalb des Radträgers 2 liegt. Das Kugelgelenk des oberen Längslenkers 6 ist mit 9 bezeichnet. Die Kugelgelenke erlauben dem Radträger, die zuvor erwähnten Drehbewegungen für den Lenkeinschlag und Schwenkbewegungen beim Einfedern des Vorderrades auszuführen.

Der Vollständigkeit halber sei noch erwähnt, dass im oberen Bereich des Rahmens 7 ist ein Lenklager 10 vorgesehen, in dem ein Lenkerrohr eines Lenkers 11 gelagert ist. Ferner verbindet eine Scherenlenkereinrichtung 12 den Lenker 11 bzw. sein Lenkrohr mit dem Radträger 2.

Wie Fig. 2 deutlich zeigt, weist der obere Längslenker 6 an seiner Unterseite in Nachbarschaft zu dem Kugelgelenk 9 eine nach unten offene, im Querschnitt rechteckige Quernut 13 auf. Die Quernut 13 verläuft demnach senkrecht zur vertikalen Fahrzeugmittenebene und erstreckt sich über die ganze Breite des Längslenkers 6. In die Quernut 13 ist ein Nutstein 14 eingelegt und im Bereich des nach oben zeigenden Nutbodens mit dem Längslenker 6 verschraubt (nicht erkennbar). Dabei füllt der Nutstein 14 die Quernut 13 vollständig oder nahezu vollständig aus.

Diese Anordnung von Quernut 13 und Nutstein 14 wirkt folgendermaßen. Erfährt das Vorderrad 3 einen horizontalen Stoß, wie er durch einen Kraftpfeil 15 in Fig. 1 angedeutet sein soll, so wird der untere Abschnitt des Radträgers 2 nach hinten gedrückt und über das Kugelgelenk des unteren Längslenkers 5 der obere Abschnitt des Radträgers nach vorne. Am etwas außermittig am Kugelgelenk 9 nach oben versetzt angebundenen oberen Längslenker 6 wirkt dadurch ein rechtsdrehendes Biegemoment entsprechend einem Momentenpfeil 16 (Fig. 2). Dieses Moment biegt den Längslenker 6, insbesondere im Bereich der Quernut 13 auf. Dies ist wünschenswert, da es anderenfalls zu Rissen oder Brüchen der beanspruchten Bauteilen kommen würde. Die Quernut 13 unterstützt damit durch die von ihr bewirkte Materialschwächung des Längslenkers 6 den Vorgang. Der Nutstein 13 hat bei diesem Belastungsfall keinen Einfluss.

Anders dagegen bei einer Kraft, die senkrecht auf das Vorderrad 3 wirkt, wie sie in Fig.1 symbolisch mit einem Kraftpfeil 17 gekennzeichnet ist. In diesem Fall versucht der untere Abschnitt des Radträgers 2 nach vorne zu schwenken mit der Folge, dass über das obere Kugelgelenk 9 ein linksdrehendes Biegemoment entsprechend dem Momentenpfeil (18) am oberen Längslenker 6 wirkt. Das Moment würde ein Zusammendrücken der Quernut 13 bewirken; dies verhindert jedoch der eingelegte Nutstein 14. Damit versteift er insgesamt den Längslenker 6, so dass derartige Belastungen die Bauteile nicht beschädigen.

## Patentansprüche

1. Radaufhängung für ein lenkbares Fahrzeugrad, mit einem Radträger (2), an dem das Fahrzeugrad (3) gelagert und der mit zwei übereinander angeordnete Längslenker (5,6) schwenk- und drehbar am Fahrzeugrahmen (7) gehalten ist, **dadurch gekennzeichnet, dass** wenigstens einer der Längslenker (6) in Querrichtung eine Materialschwächung in Form einer Ausnehmung aufweist, die mit einem darin befestigten Nutstein (14) ausgefüllt ist.

2. Radaufhängung nach Anspruch 1, **dadurch gekennzeichnet, dass** die Ausnehmung die Form einer nach unten offenen Quernut (13) ausweist, in der der Nutstein (14) im Bereich des Nutbodens befestigt ist.

3. Radaufhängung für ein lenkbares Vorderrad eines Motorrades, bei der der obere und untere Längslenker (6, 5) über Drehgelenke mit dem Motorradrahmen (7) oder rahmenfesten Bauteilen verbunden sind und bei der die beiden Längslenker (5, 6) über Universalgelenke den Radträger (2) dreh- und schwenkbar lagern, nach Anspruch 1 oder 2, **dadurch gekennzeichnet, dass** die Materialschwächung im oberen Längslenker (6) vorgesehen ist.

## Claims

1. A suspension for a steerable wheel of a vehicle, comprising a wheel holder (2) on which the wheel (3) is mounted and held by two superposed longitudinal members (5, 6) so that it can pivot and rotate on the vehicle frame (7), **characterised in that** at least one of the longitudinal members (6) has a thin place in the form of a recess in the transverse direction, filled with a block (14) fastened therein.

2. A wheel suspension according to claim 1, **characterised in that** the recess is in the form of a downwardly open transverse slot (13) in which the block (14) is fastened, near the bottom of the slot.

3. A suspension for a steerable front wheel of a motorcycle, wherein the top and bottom longitudinal members (6, 5) are connected by swivel joints to the motorcycle frame (7) or to components fixed to the frame and wherein the two longitudinal members (5, 6) pivotably support the wheel carrier (2) on universal joints according to claim 1 or claim 2, **characterised in that** the thin place is formed in the top longitudinal member (6).

## Revendications

1. Suspension de roue pour une roue directrice de véhicule comportant un support de roue (2) sur lequel est montée la roue (3) et qui est porté par le châssis (7) du véhicule de manière pivotante et en rotation par l'intermédiaire de deux bras longitudinaux (5, 6) superposés,
**caractérisée en ce qu'**
au moins l'un des deux bras longitudinaux (6) présente dans la direction transversale, un affaiblissement de matière sous la forme d'une cavité recevant un galet de rainure (14) fixé dans cette cavité.

2. Suspension de roue selon la revendication 1,
**caractérisée en ce que**
la cavité a la forme d'une rainure transversale (13) ouverte vers le bas et le galet de rainure (14) est fixé dans la zone du fond de la rainure.

3. Suspension de roue pour la roue avant directrice d'une moto dont les bras longitudinaux supérieur et inférieur (6, 5) sont reliés par des articulations de rotation au châssis (7) de la moto ou à des composants solidaires du châssis et les deux bras longitudinaux (5, 6) portent le support de roue (2) de manière pivotante et rotative par des articulations universelles, selon l'une quelconque des revendications 1 ou 2,
**caractérisée en ce que**
l'affaiblissement de matière est prévu dans le bras longitudinal supérieur (6).
